# EUROPÄISCHE PATENTANMELDUNG

(11) **EP 4 796 369 A1**
(43) Veröffentlichungstag der Anmeldung: **26.08.2026**
(21) Anmeldenummer: 25159010.5
(22) Anmeldetag: 20.02.2025
(51) Int. Cl.: B60L 50/60, B60L 53/80, B60L 58/12, B60S 5/06

(54) **TRANSPORTVORRICHTUNG FÜR AKKUMULATOREN**

(71) Anmelder: Hilti Aktiengesellschaft, 9494 Schaan (LI)
(72) Erfinder: Timpe, Stephan Udo, 76137 Karlsruhe (DE); Baudy, Max Erik, 76185 Karlsruhe (DE); Bastisch, Benedikt Konrad, 76131 Karlsruhe (DE); Gäbele, Jonas, 76131 Karlsruhe (DE); Dobratz, Florian Andreas Rolf Eduard, 76227 Durlach (DE)
(74) Vertreter: Hilti Aktiengesellschaft Corporate Intellectual Property

(57) **Zusammenfassung**

Vorrichtung zum Transportieren einer Anzahl an Akkumulatoren, insbesondere als Energiespeicher für eine Werkzeugmaschine mit einer Steuerungseinrichtung mit wenigstens einer Speichereinheit, einer Kommunikationseinrichtung zum Ein- und Ausgeben von Signalen, einer Navigationseinrichtung, einer Aufnahme- und Halteeinrichtung zum Aufnehmen und Halten wenigstens eines Akkumulators, einem Antrieb zum Antreiben der Vorrichtung, einer Fahrwerkseinrichtung mit einer Lenkeinheit sowie einer Energieversorgung wenigstens zur Versorgung des Antriebs mit elektrischer Energie.

Verfahren zum Steuern und Regeln einer Vorrichtung zum Transportieren einer Anzahl an Akkumulatoren.

System enthaltend eine Vorrichtung zum Transportieren einer Anzahl an Akkumulatoren sowie eine Ladevorrichtung zum Versorgen wenigstens eines Akkumulators mit elektrischer Energie.

## Beschreibung

Die vorliegende Erfindung betrifft eine Vorrichtung zum Transportieren einer Anzahl an Akkumulatoren, insbesondere als Energiespeicher für eine Werkzeugmaschine.

Des Weiteren betrifft die vorliegende Erfindung ein Verfahren zum Steuern und Regeln einer Vorrichtung zum Transportieren einer Anzahl an Akkumulatoren.

Darüber hinaus betrifft die vorliegende Erfindung ein System enthaltend eine Vorrichtung zum Transportieren einer Anzahl an Akkumulatoren sowie eine Ladevorrichtung zum Versorgen wenigstens eines Akkumulators mit elektrischer Energie.

Auf dem Markt erhältliche Akku-Ladeeinrichtungen, insbesondere Ladevorrichtungen zum Versorgen von Werkzeugmaschinen-Akkumulatoren mit elektrischer Energie, gemäß dem Stand der Technik sind für gewöhnlich an einem bestimmten Ort positioniert. Im Falle, dass ein Arbeiter einen mit elektrischer Energie geladenen Akkumulator benötigt, sind häufig lange und zeitraubende Wegstrecken zurückzulegen. Dies kann zu ungewünschten Verzögerung bzw. Arbeitsausfällen führen.

Es ist damit Aufgabe der vorliegenden Erfindung das vorstehend beschriebene Problem zu lösen.

Die Aufgabe wird gelöst durch den Gegenstand des unabhängigen Patentanspruchs 1, 11 und 14.

Weitere vorteilhafte Ausführungsformen des erfindungsgemäßen Gegenstands sind in den entsprechenden abhängigen Patentansprüchen enthalten.

Die Aufgabe wird dabei insbesondere gelöst durch eine Vorrichtung zum Transportieren einer Anzahl an Akkumulatoren, insbesondere als Energiespeicher für eine Werkzeugmaschine.

Erfindungsgemäß enthält die Vorrichtung eine Steuerungseinrichtung mit wenigstens einer Speichereinheit, eine Kommunikationseinrichtung zum Ein- und Ausgeben von Signalen, eine Navigationseinrichtung, eine Aufnahme- und Halteeinrichtung zum Aufnehmen und Halten wenigstens eines Akkumulators, einen Antrieb zum Antreiben der Vorrichtung (Elektromotor), eine Fahrwerkseinrichtung mit einer Lenkeinheit sowie eine Energieversorgung wenigstens zur Versorgung des Antriebs mit elektrischer Energie.

Gemäß einer vorteilhaften Ausführungsform kann es möglich sein, dass die Aufnahme- und Halteeinrichtung wenigstens eine erste und zweite Aufnahmeeinheit enthalten ist.

Entsprechend einer weiteren vorteilhaften Ausführungsform kann es möglich sein, dass die wenigstens eine Aufnahmeeinheit wenigstens eine Schnittstelle zum wiederlösbaren Verbinden der Aufnahmeeinheit mit einem Akkumulator enthält.

Gemäß einer weiteren vorteilhaften Ausführungsform kann es möglich sein, dass die wenigstens eine Aufnahmeeinheit wenigstens eine Schnittstelle zum wiederlösbaren Verbinden der Aufnahmeeinheit mit einem Sensormodul enthält.

Entsprechend einer weiteren vorteilhaften Ausführungsform kann es möglich sein, dass das Sensormodul wenigstens einen Sensor enthält, wobei der wenigstens eine Sensor so mit der Steuerungseinrichtung, Speichereinheit und/oder Navigationseinrichtung verbindbar ist, dass wenigstens ein von dem wenigstens einen Sensor erfasster Wert an die Steuerungseinrichtung, Speichereinheit und/oder Navigationseinrichtung gesendet werden kann.

Gemäß einer weiteren vorteilhaften Ausführungsform kann es möglich sein, dass die wenigstens eine Aufnahmeeinheit eine Verriegelungseinrichtung zum wahlweisen Verriegeln eines Akkumulators oder eines Sensormoduls in einer Aufnahmeeinheit enthält.

Entsprechend einer weiteren vorteilhaften Ausführungsform kann es möglich sein, dass die Verriegelungseinrichtung eine Signaleingabeeinheit zum reversiblen Einstellen der Verriegelungseinrichtung in einen verriegelten oder entriegelten Zustand enthält.

Gemäß einer weiteren vorteilhaften Ausführungsform kann es möglich sein, dass die Signaleingabeeinheit der Verriegelungseinrichtung mit der Kommunikationseinrichtung verbindbar ist.

Entsprechend einer weiteren vorteilhaften Ausführungsform kann es möglich sein, dass eine Abdeckeinrichtung zum wenigstens teilweisen Abdecken der wenigstens einen Aufnahmeeinheit verbunden mit wenigstens einem Akkumulator oder wenigstens einem Sensormodul enthalten ist.

Gemäß einer weiteren vorteilhaften Ausführungsform kann es möglich sein, dass die Abdeckeinrichtung eine Temperaturregeleinrichtung zum wahlweisen Kühlen oder Heizen der wenigstens einen Aufnahmeeinheit enthält.

Darüber hinaus wird die Aufgabe gelöst durch ein Verfahren zum Steuern und Regeln einer Vorrichtung zum Transportieren einer Anzahl an Akkumulatoren.

Erfindungsgemäß sind die folgenden Verfahrensschritte enthält
- Verbinden wenigstens eines ersten Akkumulators mit der Aufnahme- und Halteeinrichtung;
- Senden wenigstens eines Kennwertes des wenigstens ersten Akkumulators an die Steuerungseinrichtung;
- Transportieren des wenigstens ersten Akkumulators von einem ersten Ort zu einem zweiten Ort in Abhängigkeit des wenigstens einen Kennwertes des wenigstens ersten Akkumulators oder in Abhängigkeit wenigstens eines durch die Kommunikationseinrichtung empfangenden Signals;
- Trennen des wenigstens ersten Akkumulators von der Aufnahme- und Halteeinrichtung;
- Verbinden wenigstens eines zweiten Akkumulators mit der Aufnahme- und Halteeinrichtung;
- Senden wenigstens eines Kennwertes des wenigstens zweiten Akkumulators an die Steuerungseinrichtung;
- Transportieren des wenigstens zweiten Akkumulators von dem zweiten Ort zu einem ersten oder dritten Ort in Abhängigkeit des wenigstens einen Kennwertes des wenigstens zweiten Akkumulators oder in Abhängigkeit wenigstens eines durch die Kommunikationseinrichtung empfangenden Signals.

Der erste Akkumulator kann dabei einen relativ niedrigen Ladezustand (beispielsweise 10% Ladekapazität) und der zweite Akkumulator kann einen relativ hohen Ladezustand (beispielsweise 80%) aufweisen. Bei dem Kennwert kann es sich um den Ladezustand (oder auch Ladekapazität oder Ladung), SoC (State of Charge) oder SoH (State of Health) eines Akkumulators handeln.

Gemäß einer vorteilhaften Ausführungsform können die zusätzlichen Verfahrensschritte enthalten sein
- Verriegeln eines Akkumulators oder eines Sensormoduls in einer Aufnahmeeinheit mittels der Verriegelungseinrichtung durch Eingeben wenigstens eines ersten Signals an der Signaleingabeeinheit; und
- Entriegeln des wenigstens einen Akkumulators oder Sensormoduls von der Aufnahmeeinheit durch Eingabe wenigstens eines zweiten Signals an der Signaleingabeeinheit.

Entsprechend einer weiteren vorteilhaften Ausführungsform können die zusätzlichen Verfahrensschritte enthalten sein
- Erfassen wenigstens eines Wertes durch wenigstens einen Sensor eines Sensormoduls;
- Senden des wenigstens einen erfassten Wertes an die an die Steuerungseinrichtung, Speichereinheit und/oder Navigationseinrichtung; und
- Einstellen des Antriebs von einem ersten in einen zweiten Zustand und/oder Einstellen der Fahrwerkseinrichtung von einem ersten in einen zweiten Zustand in Abhängigkeit des wenigstens einen erfassten Wertes.

Des Weiteren wird die Aufgabe gelöst durch ein System enthaltend eine Vorrichtung zum Transportieren einer Anzahl an Akkumulatoren sowie eine Ladevorrichtung zum Versorgen wenigstens eines Akkumulators mit elektrischer Energie.

Erfindungsgemäß ist vorgesehen, dass die Ladevorrichtung eine Greifeinrichtung zum Entnehmen wenigstens eines Akkumulators aus einer Aufnahmeeinheit sowie zum Einlegen wenigstens eines Akkumulators in eine Aufnahmeeinheit enthält.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine Seitenansicht auf die erfindungsgemäße Vorrichtung gemäß einer ersten Ausführungsform;
- Figur 2a: eine perspektivische Ansicht auf eine Aufnahme- und Halteeinrichtung mit Akkumulatoren in Aufnahmeeinheiten;
- Figur 2b: eine perspektivische Ansicht auf die Aufnahme- und Halteeinrichtung ohne Akkumulatoren in den Aufnahmeeinheiten;
- Figur 2c: eine Seitenansicht auf eine Aufnahme- und Halteeinrichtung gemäß einer ersten beispielhaften Ausführungsform mit Aufnahmeeinheiten verbunden mit Akkumulatoren und Sensormodulen;
- Figur 3: eine Seitenansicht auf die erfindungsgemäße Vorrichtung und auf eine Ladevorrichtung mit einer Greifeinrichtung in einem ersten Zustand;
- Figur 4: eine Seitenansicht auf die erfindungsgemäße Vorrichtung und auf die Ladevorrichtung mit der Greifeinrichtung in einem zweiten Zustand;
- Figur 5: eine Seitenansicht auf die erfindungsgemäße Vorrichtung und auf die Ladevorrichtung mit der Greifeinrichtung in einem dritten Zustand;
- Figur 6: eine Seitenansicht auf die erfindungsgemäße Vorrichtung und auf die Ladevorrichtung mit der Greifeinrichtung in einem vierten Zustand;
- Figur 7: eine Seitenansicht auf die erfindungsgemäße Vorrichtung und auf die Ladevorrichtung mit der Greifeinrichtung in einem fünften Zustand;
- Figur 8: eine Seitenansicht auf die erfindungsgemäße Vorrichtung und auf die Ladevorrichtung mit der Greifeinrichtung in einem sechsten Zustand;
- Figur 9: eine Seitenansicht auf die erfindungsgemäße Vorrichtung und auf die Ladevorrichtung mit der Greifeinrichtung in einem siebten Zustand;
- Figur 10: eine Seitenansicht auf die erfindungsgemäße Vorrichtung mit einer Abdeckeinrichtung und einer Temperaturregeleinrichtung in einem geschlossenen Zustand; und
- Figur 11: eine Seitenansicht auf die erfindungsgemäße Vorrichtung mit der Abdeckeinrichtung und der Temperaturregeleinrichtung in einem geöffneten Zustand.

### Ausführungsbeispiele:

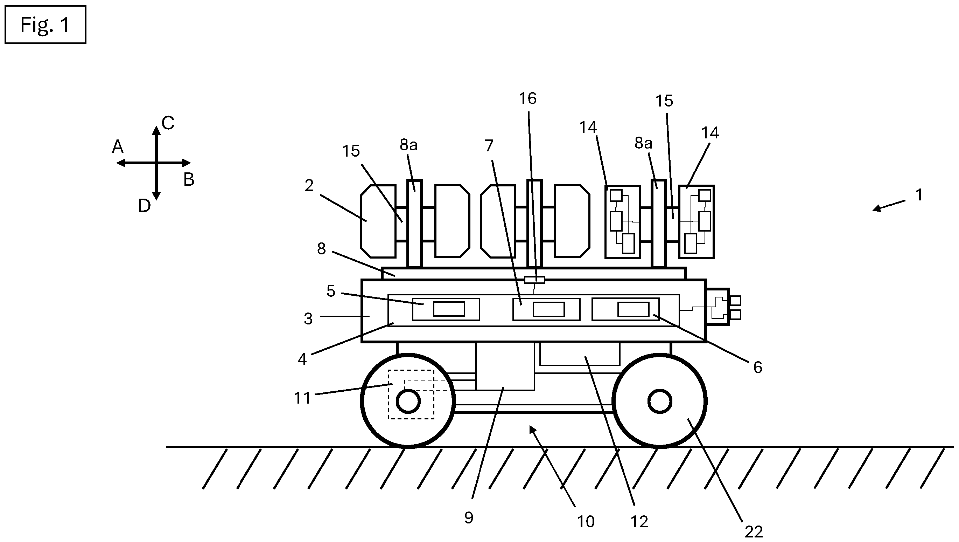

In Figur 1 ist eine Vorrichtung 1 zum Transportieren einer Anzahl an Akkumulatoren 2, insbesondere als Energiespeicher für eine Werkzeugmaschine, gemäß einer beispielhaften Ausführungsform gezeigt.

Die Vorrichtung 1 enthält im Wesentlichen ein Gehäuse 3, eine Steuerungseinrichtung 4 mit einer Speichereinheit 5, eine Kommunikationseinrichtung 6, eine Navigationseinrichtung 7, eine Aufnahme- und Halteeinrichtung 8, einen Antrieb 9, eine Fahrwerkseinrichtung 10 mit einer Lenkeinheit 11 sowie eine Energieversorgung 12.

Das Gehäuse 3 der Vorrichtung 1 beinhaltet im Wesentlichen die Steuerungseinrichtung 4 mit der Speichereinheit 5, die Kommunikationseinrichtung 6, die Navigationseinrichtung 7, den Antrieb 9 sowie die Energieversorgung 12, vgl. Figur 1.

Wie in Figur 1 gezeigt, ist die Aufnahme- und Halteeinrichtung 8 an einer Oberseite 3a des Gehäuses 3 und die Fahrwerkseinrichtung 10 mit der Lenkeinheit 11 ist an einer Unterseite 3b des Gehäuses 3 positioniert.

Die Steuerungseinrichtung 4 dient zum Steuern und Regeln der unterschiedlichen Funktionen der Vorrichtung 1 oder der einzelnen Komponenten (z.B. der Antrieb 9) der Vorrichtung 1. In der Speichereinheit 11 sind unter anderem verschiedene Schwellwerte, Lagepläne, Landkarten, Positionen, Rechenmodelle (z.B. Algorithmen) und dergleichen hinterlegt.

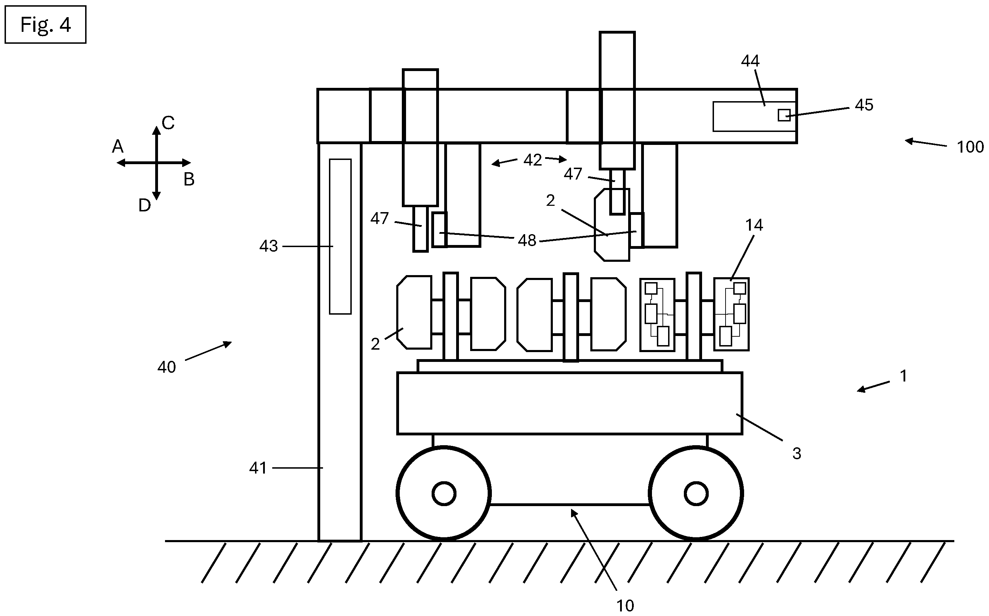

Die Kommunikationseinrichtung 6 dient zum Ein- und Ausgeben von Signalen und zum Kommunizieren mit externen Geräten 13. Ein externes Gerät 13 ist in Figur 4 beispielhaft als Smartphone dargestellt. Die Kommunikationseinrichtung 6 steht mit der Steuerungseinrichtung 4 in Verbindung. In dem vorliegenden Ausführungsbeispiel ist die Kommunikationseinrichtung 6 als Bluetooth-Modul ausgestaltet.

Alternativ kann die Kommunikationseinrichtung 6 auch als eigenständiges GSM/LTE/(2/2.5/3G/4G/5G (LTE)-Modul ausgestaltete sein. Gemäß einer weiteren alternativen oder zusätzlichen Ausführungsform kann die Kommunikationseinrichtung 6 auch einen USB-Anschluss oder einen andere Datenübertragungsschnittstelle aufweisen.

Die Navigationseinrichtung 7 enthält ein GPS-Modul (Global Positioning System) und dient zum Navigieren der Vorrichtung 1. Mithilfe von Positionsbestimmungen (z.B. Satellit, Funk, GSM bzw. inertes oder autonomes System) und/oder Geoinformationen (z.B. Topologie-, Straßen-, Luft- oder Seekarten) kann eine Zielführung zu einem gewählten Ort oder eine Route unter Beachtung gewünschter Kriterien möglich sein. Die Navigationseinrichtung 7 steht mit der Kommunikationseinrichtung 6 steht mit der Steuerungseinrichtung 4 in Verbindung.

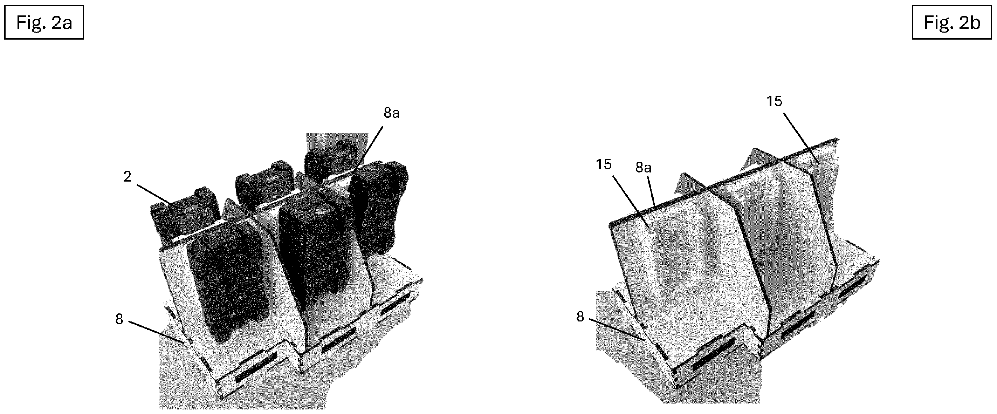

Die Aufnahme- und Halteeinrichtung 8 enthält sechs Aufnahmeeinheiten 8a zum Aufnehmen und Halten von Akkumulators 2 oder Sensormodulen 14. In dem gezeigten Ausführungsbeispiel sind vier Akkumulatoren 2 mit vier Aufnahmeeinheiten 8a und zwei Sensormodule 14 mit zwei Aufnahmeeinheiten 8a verbunden. Es können auch mehr oder weniger als sechs Aufnahmeeinheiten 8a an der Aufnahme- und Halteeinrichtung 8 enthalten sein. In Figur 2a ist eine beispielhafte Aufnahme- und Halteeinrichtung 8 mit sechs Aufnahmeeinheiten 8a gezeigt, wobei in jeder Aufnahmeeinheit 8a ein Akkumulator 2 eingeführt ist. Die Aufnahmeeinheiten 8a sind dabei unterschiedliche tief ausgestaltet, sodass auch unterschiedlich große Akkumulatoren 2 aufgenommen werden können. In Figur 2b ist die beispielhafte Aufnahme- und Halteeinrichtung 8 mit den sechs Aufnahmeeinheiten 8a ohne Akkumulatoren 2 gezeigt.

Jede Aufnahmeeinheit 8a weist eine Schnittstelle 15 mit einem Pluskontakt, einem Minuskontakt und einen Kommunikationskontakt auf. Es können auch mehr als ein Pluskontakt, ein Minuskontakt und ein Kommunikationskontakt an einer Anschlusseinheit vorhanden sein. In Figur 2b sind die Schnittstellen der jeweiligen Aufnahmeeinheit gezeigt.

Durch die jeweiligen Pluskontakte und Minuskontakte kann ein Stromkreis mit einem angeschlossen Akkumulator geschlossen werden. Durch die Kommunikationskontakte können Daten und Informationen zwischen der Aufnahme- und Halteeinrichtung und den Akkumulatoren oder den Sensormodulen ausgetauscht werden.

In den Figuren sind die Pluskontakte, Minuskontakte oder Kommunikationskontakte nicht gezeigt.

Die Aufnahme- und Halteeinrichtung 8 enthält eine Verbindungseinheit 16 zum wiederlösbaren Verbinden der Aufnahme- und Halteeinrichtung 8 mit dem Gehäuse 3 der Vorrichtung 1 und mit der Steuerungseinrichtung 4. Durch die Verbindungseinheit können Daten und Informationen zwischen der Aufnahme- und Halteeinrichtung 8 und der Steuerungseinrichtung 4 ausgetauscht werden. So ist es möglich, dass Daten und Informationen zwischen den Akkumulatoren 2 bzw. den Sensormodulen 14 und der Steuerungseinrichtung 4 ausgetauscht werden.

Ein Sensormodul 14 enthält im Wesentlichen ein Modulgehäuse 17, eine Schnittstelle 18 sowie eine Anzahl an Sensoren 19. Zusätzlich kann jedes Sensormodul 14 auch eine eigene Steuerung 20 und einen Speicher 21 enthalten. In dem vorliegenden Ausführungsbeispiel enthält ein Sensormodul 14 einen LiDAR-Sensor zum Erfassen von Abständen und Geschwindigkeiten. Alternativ oder zusätzlich kann ein Sensormodul 14 eine Kamera, Ultraschallsensor, Sonar und/oder eine Radareinheit enthalten.

Die Schnittstelle 18 eines Sensormoduls 14 ist identisch zu der Schnittstelle eines Akkumulators 2, sodass über die jeweiligen Pluskontakte und Minuskontakte ein Stromkreis mit der Energieversorgung erzeugt werden kann. Ein Sensormodul 14 wird hierdurch mit elektrischer Energie versorgt. Durch die Kommunikationskontakte können Daten und Informationen zwischen der Aufnahme- und Halteeinrichtung 8 und den Sensormodulen 14 ausgetauscht werden.

Der Antrieb 9 dient zum Antreiben der Vorrichtung 1 und ist gemäß dem vorliegenden Ausführungsbeispiel als bürstenloser Elektromotor (z.B. Gleichstrommotor) ausgestaltet. Der Antrieb 9 ist im Inneren des Gehäuses 3 der Vorrichtung 1 positioniert und so mit der Fahrwerkseinrichtung 10 verbunden, dass eine Antriebskraft zum Antreiben der Vorrichtung 1 übertragen werden kann. In dem vorliegenden Ausführungsbeispiel enthält die Fahrwerkseinrichtung 10 vier Räder 22. In den Figuren sind lediglich zwei Räder 22 gezeigt. Alternativ enthält die Fahrwerkseinrichtung 10 einen Kettenantrieb, einen Ketten- und Radantrieb oder mechanische Beine.

Die Lenkeinheit 11 dient zum Lenken bzw. Steuern der Vorrichtung 1 und bewegt hierzu in die schwenkbar gelagerten Vorderräder 22 ein. Die Lenkeinheit 11 ist so mit dem Antrieb 9 verbunden, dass ein Anteil einer in dem Antrieb 9 erzeugten Kraft auf die Lenkeinheit 11 übertragen werden kann. In dem vorliegenden Ausführungsbeispiel enthält die Lenkeinheit 11 eine Lenkstange, ein Lenkritzel und eine Zahnstange. Die Lenkstange ist mit dem Antrieb 9 verbunden und überträgt ein Drehmoment auf ein Lenkritzel, welches an einem Ende der Lenkstange positioniert ist. Das drehbar gelagerte Lenkritzel steht mit der Zahnstange so in Verbindung, dass ein Drehbewegung von der Lenkritzel in eine Linearbewegung der Zahnstange übertragen werden kann. Die jeweiligen Enden der Zahnstange sind so mit den Rädern 22 verbunden, dass die Räder 22 in eine erste oder zweite Richtung gedreht werden können. In den Figuren ist die Lenkstange, das Lenkritzel oder die Zahnstange nicht gezeigt. Die Lenkeinheit 11 ist mit der Steuerungseinrichtung 4, der Speichereinheit 5, der Kommunikationseinrichtung 6 und der Navigationseinrichtung 7 verbunden, sodass Daten und Informationen zwischen diesen Komponenten ausgetauscht werden können. Es ist hierdurch möglich, dass die Navigationseinrichtung 7 anhand von in der Speichereinheit 5 hinterlegten Daten über die Steuerungseinrichtung 4 auf die Lenkeinheit 11 eingreift.

Die Energieversorgung 12 dient zum Versorgen des Antriebs 9 mit elektrischer Energie. In dem vorliegenden Ausführungsbeispiel ist die Energieversorgung 12 als eigenständiger Akkumulator ausgestaltet und im Inneren des Gehäuses 3 der Vorrichtungen 1 positioniert. Alternativ kann die Energieversorgung 12 auch durch Akkumulatoren 2, die sich in den Aufnahmeeinheiten 8a befinden, ausgestaltet sein.

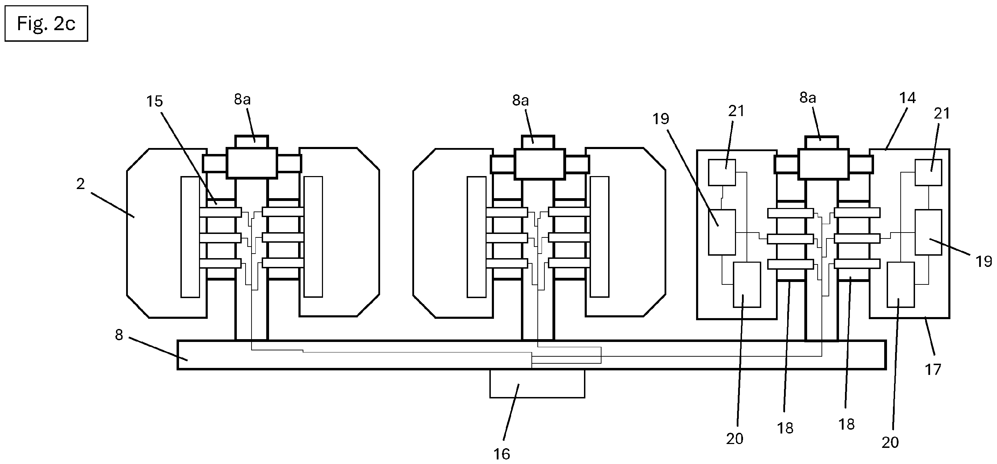

In Figur 2c ist eine beispielhafte Aufnahme- und Halteeinrichtung 8 mit sechs Aufnahmeeinheiten 8a gezeigt. An jeder Aufnahmeeinheit 8a ist jeweils eine Verriegelungseinrichtung 23 zum wahlweisen Verriegeln eines Akkumulators 2 oder eines Sensormoduls 14 in der Aufnahmeeinheit 8a positioniert. Jede einzelne Verriegelungseinrichtung 23 steht mit der Steuerungseinrichtung 4 so in Verbindung, dass die Verriegelungseinrichtungen 23 angesteuert werden. Durch die Ansteuerung kann eine oder auch alle Verriegelungseinrichtung 23 aktiviert oder deaktiviert werden. Wenn eine Signaleingabeeinheit 50 der Verriegelungseinrichtung 23 ein entsprechende Signal von der Steuerungseinrichtung 4 empfängt und die Verriegelungseinrichtung 23 aktiviert ist, kann der jeweilige Akkumulator 2 oder das Sensormodul 14 nicht aus der Aufnahmeeinheit 8a entnommen werden. Wenn eine Verriegelungseinrichtung 23 durch ein entsprechende Signal von der Steuerungseinrichtung 4 deaktiviert ist, kann der jeweilige Akkumulator 2 oder das Sensormodul 14 wieder aus der Aufnahmeeinheit 8a entnommen werden.

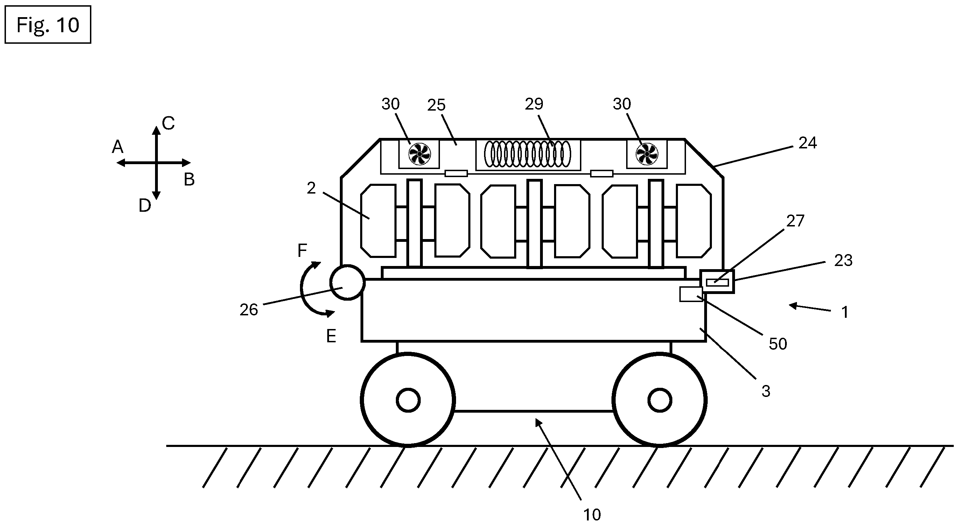

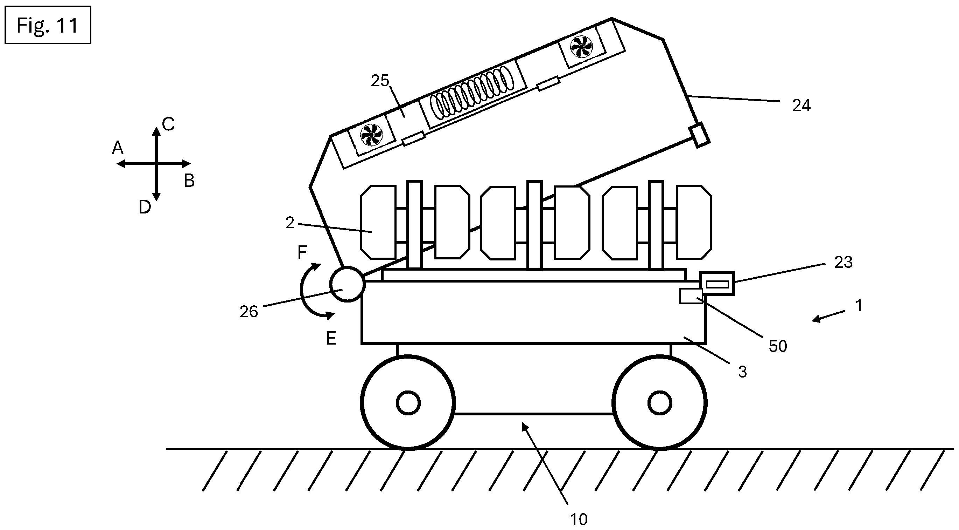

In Figur 10 und 11 ist eine Vorrichtung 1 in einer weiteren beispielhaften Ausführungsform mit einer Abdeckeinrichtung 24 und einer Temperaturregeleinrichtung 25 gezeigt. Die Abdeckeinrichtung 24 ist im Wesentlichen in Form einer Kuppel mit einer Schwenkeinrichtung 26 und einem Verschluss 27 ausgestaltet. In Figur 10 ist die Vorrichtung 1 mit einer geschlossenen Abdeckeinrichtung 24 gezeigt. Im geschlossenen Zustand kann die Abdeckeinrichtung 24 durch den Verschluss 27 verriegelt werden. Der Verschluss 27 ist gemäß dem vorliegenden Ausführungsbeispiel elektrisch bedienbar und steht mit der Steuerungseinrichtung 4 so in Verbindung, dass der Verschluss 27 durch die Steuerungseinrichtung 4 verriegelt oder entriegelt werden kann. Die tatsächliche Verbindung zwischen dem Verschluss 27 und der Steuerungseinrichtung 4 ist in den Figuren nicht gezeigt. In Figur 11 ist die Vorrichtung 1 mit einer geschlossenen Abdeckeinrichtung 24 gezeigt. Zum Öffnen und Schließen wird die als Kuppel ausgestaltete Abdeckeinrichtung 24 mittels der Schwenkeinrichtung 26 in Drehrichtung E oder F geschwenkt.

Die Temperaturregeleinrichtung 25 dient zum wahlweisen Kühlen oder Heizen der Aufnahmeeinheiten 8a unter der Abdeckeinrichtung 27. Wie in den Figuren angedeutet enthält die Temperaturregeleinrichtung 25 einen Temperatursensor 28, eine Heizung 29 und einen zwei Lüfter 30. Der Temperatursensor 28, die Heizung 29 und die zwei Lüfter 30 sind über Leitungen so mit der Steuerungseinrichtung 4 verbunden, dass von dem Temperatursensor 28 erfasste Temperaturwerte an die Steuerungseinrichtung 4 gesendet werden können. Wenn ein erfasster Temperaturwert einem bestimmten in der Speichereinheit 4 hinterlegten Schwellwert entspricht., wird die Heizung 29 und/oder die Lüfter 30 aktiviert oder deaktiviert.

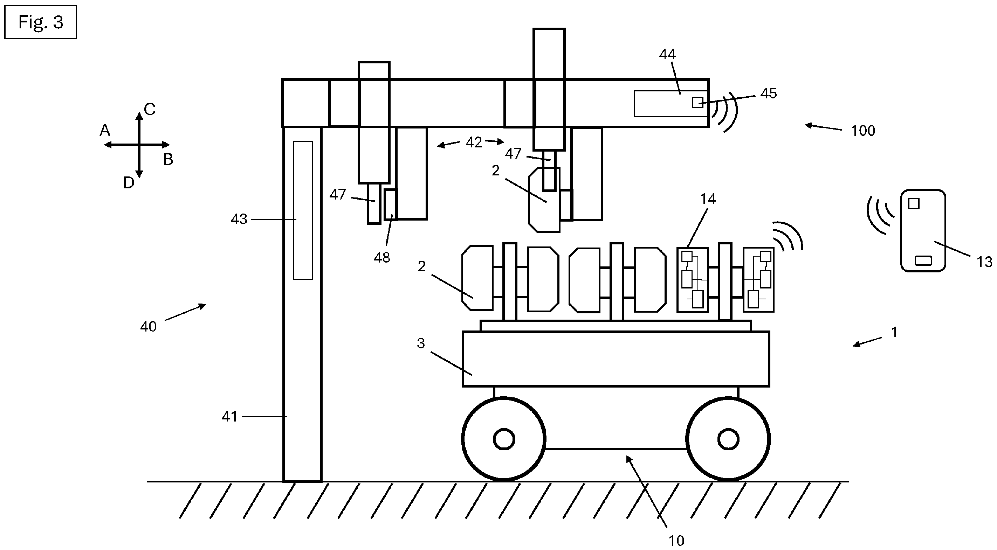

In den Figuren 3 bis 9 sind beispielhafte Verfahrensschritte zur Durchführung des erfindungsgemäßen Verfahrens an einem System 100 gemäß einer beispielhaften Ausführungsform gezeigt.

Das System 100 enthält im Wesentlichen die Vorrichtung 1 zum Transportieren einer Anzahl an Akkumulatoren 2 sowie eine Ladevorrichtung 40 zum Versorgen von Akkumulatoren 2 mit elektrischer Energie.

Die Ladevorrichtung 40 enthält im Wesentlichen einen Rahmen 41, eine oder mehrere Greifeinrichtungen 42, eine Energieversorgung 43, eine Steuerung 44 und eine Kommunikationseinrichtung 45.

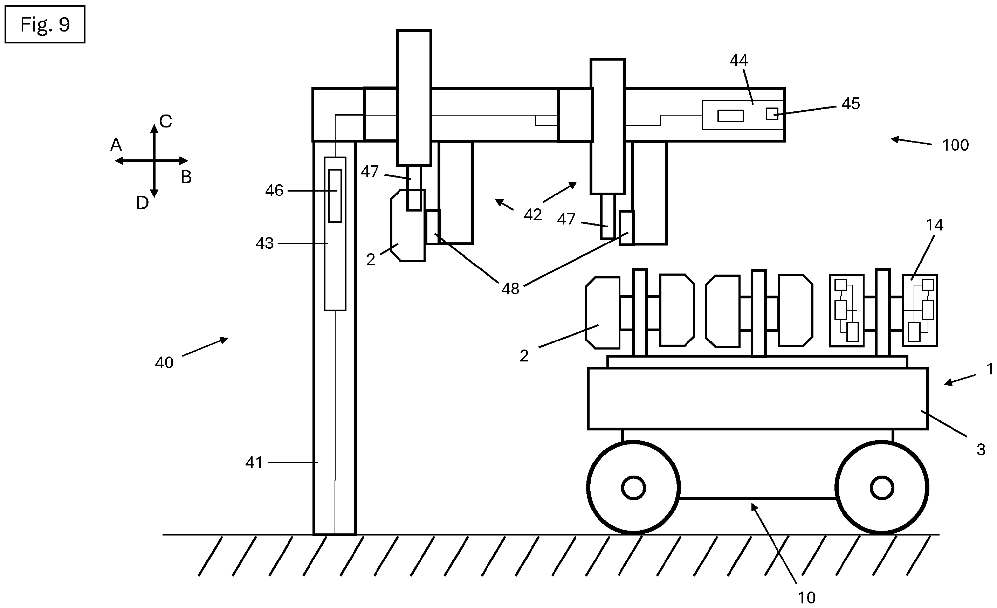

Die Energieversorgung 43 ist gemäß einer in Figur 9 gezeigten beispielhaften Ausführungsform in Form eines Netzstromanschluss (z.B. 120V, 230V oder 400V) ausgestaltet. Die Ladevorrichtung 40 enthält einen Gleichrichter 46, vgl. Figur 9.

Die Energieversorgung 43 und die Kommunikationseinrichtung 45 stehen mit der Steuerung 44 zum Austausch von Daten und Informationen in Verbindung.

Die Kommunikationseinrichtung 45 ist gemäß einer beispielhaften Ausführungsform mit einem Bluetooth-Modul sowie eine WiFi-Modul ausgestaltet, vgl. Figur 9. Mit Hilfe der Kommunikationseinrichtung 45 können Daten und Informationen zwischen der Ladevorrichtung 40 und einer Vorrichtung 1 zum Transportieren von Akkumulatoren 2 ausgetauscht werden. Jede Greifeinrichtungen 42 ist mit einem Antrieb 46 verbunden, sodass die Greifeinrichtungen 42 wahlweise in Pfeilrichtung A, B, C oder D bewegt werden kann. Jeder Antrieb 46 ist individuell mit der Energieversorgung 43 der Ladevorrichtung 40 zur Versorgung mit elektrischer Energie verbunden.

Darüber hinaus weist jede Greifeinrichtung 42 eine Greifeinheit 47 zum Greifen und Halten eines Akkumulators 2 oder eines Sensormoduls 14 auf. Gemäß einer beispielhaften Ausführungsform ist die Greifeinheit 47 zangenförmig ausgestaltet. Die Greifeinheit 47 enthält eine Schnittstelle 48 zum wiederlösbaren Verbinden mit einem Akkumulator 2. Durch die Schnittstelle 48 der Greifeinheit 47 kann der Akkumulator 2 so mit der Energieversorgung 43 der Ladevorrichtung 40 verbunden werden, dass ein Akkumulator 2 mit elektrischer Energie versorgt werden kann, wenn sich ein Akkumulator 2 in einer Greifeinheit 47 befindet. Die Greifeinheit 47 ist so mit dem Antrieb 46 verbunden, dass die Greifeinheit 47 einen Akkumulator 2 greifen und wieder loslassen kann.

Die Ladevorrichtung 40 weist in der beispielhaften Ausführungsform eine erste und zweite Greifeinrichtung 42 zum Entnehmen eines Akkumulators 2 aus einer Aufnahmeeinheit 8a sowie zum Einlegen eines Akkumulators 2 in eine Aufnahmeeinheit 8a auf. Alternativ können auch mehr oder weniger als zwei Greifeinrichtungen 42 in der Ladeeinrichtung 40 enthalten sein.

Die Vorrichtung 1 dient im Wesentlichen zum sicheren Transportieren eines oder mehrerer Akkumulators 2 von einem ersten Ort zu einem zweiten Ort. Bei dem ersten Ort handelt es sich gemäß dem vorliegenden Ausführungsbeispiel um einen Bereich einer Baustelle handeln, an der mit einer akku-betriebenen Werkzeugmaschine (z.B. Bohrmaschine, Säge, Schleifgerät oder dergleichen) gearbeitet wird. Die Baustelle oder die Werkzeugmaschine sind in den Figuren nicht gezeigt. Bei dem zweiten Ort handelt es sich gemäß dem vorliegenden Ausführungsbeispiel um eine Ladevorrichtung 40, vgl. Figur 3 bis 9.

Der Transport der Akkumulatoren 2 mit der Vorrichtung 1 erfolgt gemäß dem vorliegenden Ausführungsbeispiel in Abhängigkeit wenigstens eines Kennwertes wenigstens eines Akkumulators 2 oder in Abhängigkeit wenigstens eines durch die Kommunikationseinrichtung 6 empfangenden Signals. Mit anderen Worten: wenn ein Akkumulator 2 als Kennwert einen Ladezustand an die Vorrichtung 1 übermittelt, der einem vorbestimmten Schwellwert entspricht oder sogar unterschreitet (z.B. SoC weniger als 20%), ermittelt die Vorrichtung 1 mit Hilfe der Steuerungseinrichtung 4, der in der Speichereinheit hinterlegten Daten sowie der Navigationseinrichtung 7 eine Route zu einer Ladevorrichtung 40. Anschließend bewegt sich die Vorrichtung zu der ermittelten Ladevorrichtung 40.

In Figur 3 ist das System 100 in einem ersten Zustand gezeigt, wobei die Vorrichtung 1 in Pfeilrichtung A zu der Ladevorrichtung 40 gefahren wird. Die Aufnahme- und Halteeinrichtung 8 hält in einer ersten Aufnahmeeinheit 8a einen Akkumulator 2 mit einem relativ niedrigen Ladezustand (z.B. 10% SoC). Dieser Akkumulator 2 soll mit Hilfe der Ladevorrichtung 40 geladen werden. Eine erste Greifeinrichtung 42 greif keine Akkumulator 2 und eine zweite Greifeinrichtung 42 greift einen Akkumulator 2. Der zweite Akkumulator 2 wird durch die zweite Greifeinrichtung 42 elektrischer Energie versorgt. Beide Greifeinrichtungen 42 befinden sich in einer ersten Position. Wenn sich eine Greifeinrichtung 42 in der ersten Position befindet, ist die Greifeinheit 47 so weit wie möglich in Pfeilrichtung C nach oben bewegt worden.

In Figur 4 befindet sich die Vorrichtung 1 so zu der Ladevorrichtung 40, dass ein erster Akkumulator 2 in einer ersten Aufnahmeeinheit 8a in Pfeilrichtung D und unterhalb der ersten Greifeinrichtung 42 positioniert ist.

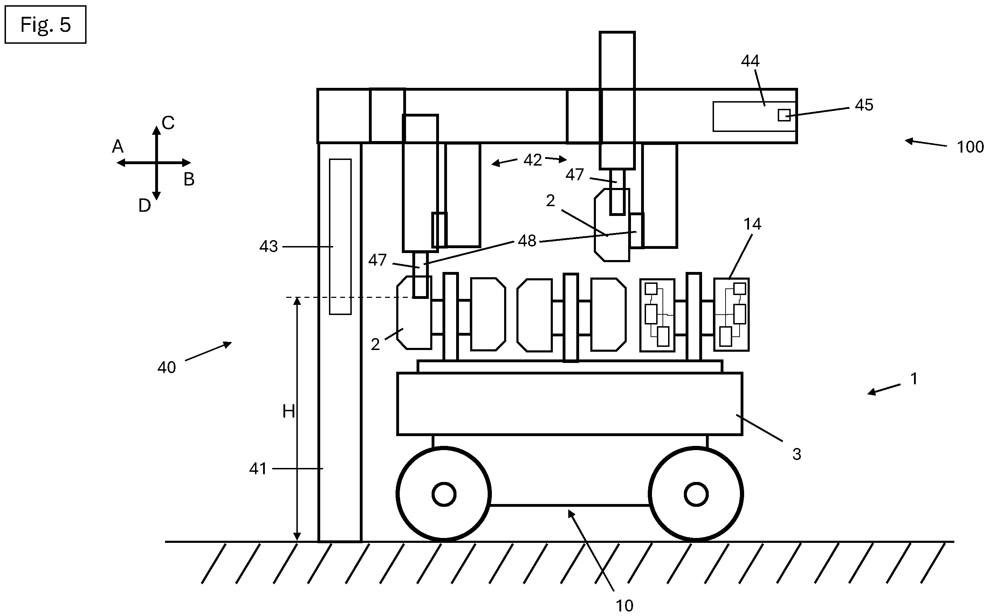

In Figur 5 ist die Greifeinheit 47 der ersten Greifeinrichtung 42 durch den Antrieb 46 von der ersten Position in eine zweite Position bewegt worden. In der zweiten Position befindet sich die Greifeinheit 47 in Pfeilrichtung D unterhalb der ersten Position und greift den ersten Akkumulator 2. Die zweite Position ist dabei als vorbestimmte bzw. definierte Höhe H verwirklicht, vgl. Figur 5. Entsprechend einer alternativen Ausführungsform kann die Ladevorrichtung 40 einen oder mehrere Abstandssensoren (z.B. in Form eines Radars, einer Kamera oder LiDAR-Sensors) enthalten, durch welche die jeweilige Ausrichtung und Position einer Vorrichtung 1 bzw. der jeweiligen Akkumulatoren 2 auf einer Vorrichtung 1 erfasst werden kann. Die Greifeinrichtungen 42 können dann aufgrund der erfassten Ausrichtungs- und Positionsdaten durch die jeweiligen Antriebe 46 positioniert werden, um die Akkumulatoren 2 zu greifen. Alternativ oder zusätzlich hierzu kann eine Vorrichtung 1 entsprechende Daten und Informationen über die Kommunikationseinrichtung 6 an eine Ladevorrichtung 40 senden, die bei der Ausrichtung und Orientierung der Greifeinrichtungen 42 bzw. der Greifeinheiten 47 dienlich sein können.

Wenn ein anderer Akkumulator 2 als beispielsweise der erste Akkumulator 2 von Vorrichtung 1 gegriffen und entnommen werden soll, kann eine Greifeinrichtung 42 durch den Antrieb 46 in Pfeilrichtung A oder B bewegt und in eine entsprechende Position gebracht werden.

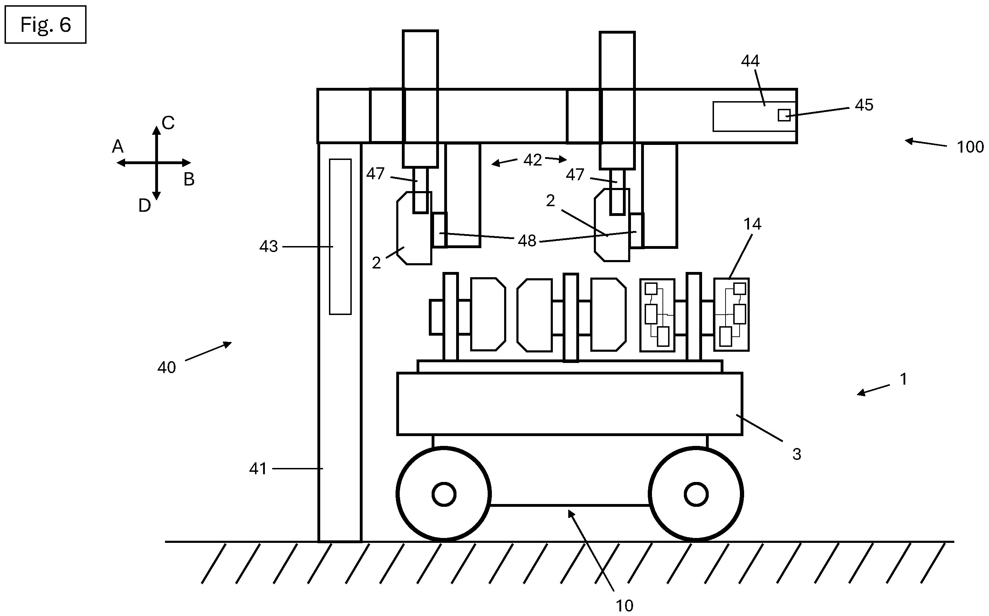

In Figur 6 ist die Greifeinheit 47 der ersten Greifeinrichtung 42 durch den Antrieb 46 in Pfeilrichtung C von der zweiten Position in die erste Position bewegt worden.

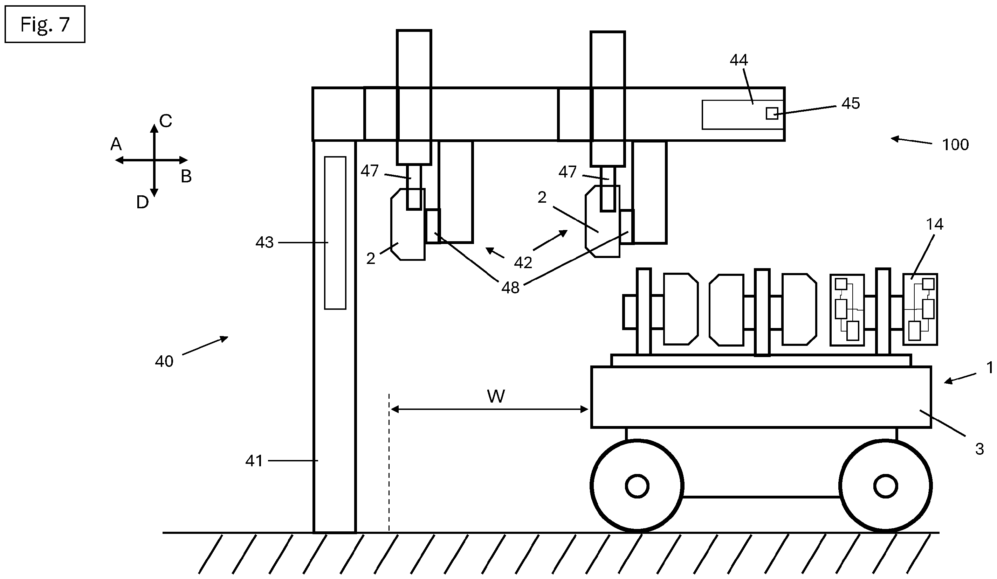

In Figur 7 ist die Vorrichtung 1 eine Wegstrecke W in Pfeilrichtung B bewegt worden. Die Vorrichtung 1 wird mit einer Zeitverzögerung (d.h. 10 Sekunden) in Pfeilrichtung B bewegt nachdem die Steuerungseinrichtung 4 der Vorrichtung 1 detektiert hat, dass der erste Akkumulator 1 von der ersten Aufnahmeeinheit 8a getrennt bzw. entnommen wurde. Die Kommunikationseinrichtung 6 der Ladevorrichtung 40 sendet entsprechende Daten und Informationen an die Vorrichtung 1, dass sich in der zweiten Greifeinrichtung 42 ein Akkumulator 1 in einem geladenen Zustand (d.h. 80% SoC) befindet und dass dieser Akkumulator 1 bereit für eine Auslieferung an die Vorrichtung 1 ist. Die Greifeinheit 47 der zweiten Greifeinrichtung 42 befindet sich in der ersten Position. Diese Daten und Informationen beinhalten des Weiteren Angaben bzgl. der Wegstrecke W sowie eine Richtungsangabe B für die Vorrichtung 1, um sich mit Hilfe des Antriebs 9 der Vorrichtung 1 für eine Akku-Übergabe an der zweiten Greifeinrichtung 42 zu positionieren.

Wenn beispielsweise kein Akkumulator 2 für eine Auslieferung an eine Vorrichtung 1 bereit ist, sendet die Kommunikationseinrichtung 6 der Ladevorrichtung 40 dementsprechende Daten und Informationen an die Vorrichtung 1. Die Vorrichtung 1 würde daraufhin an der Ladevorrichtung 40 verweilen, oder sich von der Ladevorrichtung 40 wegbewegen. Mit Hilfe der Navigationseinrichtung 7 der Vorrichtung 1 kann die Vorrichtung 1 einen bestimmten (d.h. programmierten) Ort ansteuern. Alternativ kann die Vorrichtung 1 auch aufgrund an die Kommunikationseinrichtung 6 übertragener Daten und Informationen einen bestimmten Ort ansteuern.

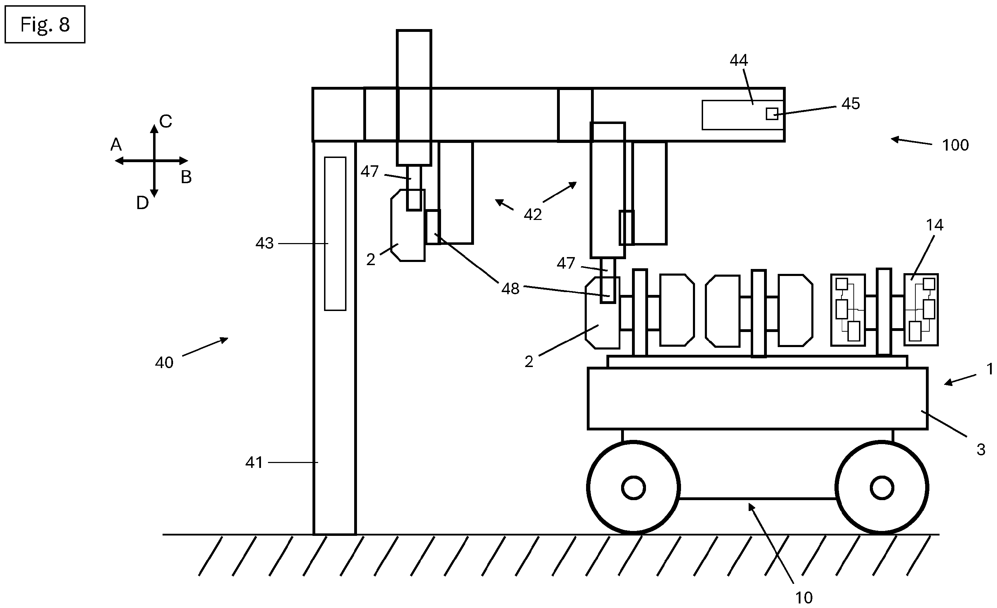

In Figur 8 befindet sich die erste Aufnahmeeinheit 8a in Pfeilrichtung D unterhalb der Greifeinheit 47 der zweiten Greifeinrichtung 42. Die Greifeinheit 47 der zweiten Greifeinrichtung 42 hat sich von der ersten in die zweite Position bewegt. In der zweiten Position übergibt die Greifeinheit 47 den Akkumulator 2 an die freie zweite Aufnahmeeinheit 8a, sodass der Akkumulator 1 mit der Schnittstelle 15 der ersten Aufnahmeeinheit 8a verbunden wird. Nach dem Verbinden des Akkumulators 2 mit der ersten Aufnahmeeinheit 8a übersendet der Akkumulator 1 über die Schnittstelle 15 der ersten Aufnahmeeinheit 8a den Kennwerte an die Steuerungseinrichtung 4 der Vorrichtung 1. Zu den Kennwerten gehört unter anderem der Ladezustand (d.h. SoC) des Akkumulators 2.

Nach erfolgreicher Übergabe des Akkumulators 2 an die erste Aufnahmeeinheit 8a bewegt sich die Greifeinheit 47 der ersten Greifeinrichtung 42 von der zweiten Position in Pfeilrichtung C wieder in die erste Position.

Die Vorrichtung 1 bewegt sich anschließend weiter in Pfeilrichtung B.

Das vorstehend beschriebene Verfahren kann anstelle eines Akkumulators 2 auch auf nahezu identischer Weise mit einem Sensormodul 14 durchgeführt werden.

### Bezugszeichen

- 1: Vorrichtung
- 2: Akkumulator
- 3: Gehäuse
- 4: Steuerungseinrichtung
- 5: Speichereinheit
- 6: Kommunikationseinrichtung
- 7: Navigationseinrichtung
- 8: Aufnahme- und Halteeinrichtung
- 8a: Aufnahmeeinheit
- 9: Antrieb
- 10: Fahrwerkseinrichtung
- 11: Lenkeinheit
- 12: Energieversorgung
- 13: externes Gerät
- 14: Sensormodul
- 15: Schnittstelle einer Aufnahmeeinheit
- 16: Verbindungseinheit
- 17: Modulgehäuse
- 18: Schnittstelle
- 19: Sensoren
- 20: Steuerung
- 21: Speicher
- 22: Rad
- 23: Verriegelungseinrichtung
- 24: Abdeckeinrichtung
- 25: Temperaturregeleinrichtung
- 26: Schwenkeinrichtung
- 27: Verschluss
- 28: Temperatursensor
- 29: Heizung
- 30: Lüfter
- 40: Ladevorrichtung
- 41: Rahmen
- 42: Greifeinrichtungen
- 43: Energieversorgung
- 44: Steuerung
- 45: Kommunikationseinrichtung
- 46: Gleichrichter
- 47: Greifeinheit
- 48: Schnittstelle der Greifeinheit
- 50: Signaleingabeeinheit
- 100: System

## Patentansprüche

1. Vorrichtung (1) zum Transportieren einer Anzahl an Akkumulatoren (2), insbesondere als Energiespeicher für eine Werkzeugmaschine,
**gekennzeichnet durch**
- eine Steuerungseinrichtung (4) mit wenigstens einer Speichereinheit (5);
- eine Kommunikationseinrichtung (6) zum Ein- und Ausgeben von Signalen;
- eine Navigationseinrichtung (7);
- eine Aufnahme- und Halteeinrichtung (8) zum Aufnehmen und Halten wenigstens eines Akkumulators (2);
- einen Antrieb (9) zum Antreiben der Vorrichtung (1);
- eine Fahrwerkseinrichtung (10) mit einer Lenkeinheit (11); sowie
- eine Energieversorgung (12) wenigstens zur Versorgung des Antriebs (9) mit elektrischer Energie.

2. Vorrichtung (1) nach Anspruch 1,
**dadurch gekennzeichnet, dass** die Aufnahme- und Halteeinrichtung (8) wenigstens eine erste und zweite Aufnahmeeinheit (8a) enthalten ist.

3. Vorrichtung (1) nach Anspruch 2,
**dadurch gekennzeichnet, dass** die wenigstens eine Aufnahmeeinheit (8a) wenigstens eine Schnittstelle (15) zum wiederlösbaren Verbinden der Aufnahmeeinheit (8a) mit einem Akkumulator (2) enthält.

4. Vorrichtung (1) nach Anspruch 2,
**dadurch gekennzeichnet, dass** die wenigstens eine Aufnahmeeinheit (8a) wenigstens eine Schnittstelle (15) zum wiederlösbaren Verbinden der Aufnahmeeinheit (8a) mit einem Sensormodul (14) enthält.

5. Vorrichtung (1) nach Anspruch 4,
**dadurch gekennzeichnet, dass** das Sensormodul (14) wenigstens einen Sensor (19) enthält, wobei der wenigstens eine Sensor (19) so mit der Steuerungseinrichtung (4), Speichereinheit (5) und/oder Navigationseinrichtung (7) verbindbar ist, dass wenigstens ein von dem wenigstens einen Sensor (19) erfasster Wert an die Steuerungseinrichtung, (4) Speichereinheit (5) und/oder Navigationseinrichtung (7) gesendet werden kann.

6. Vorrichtung (1) nach wenigstens einem der vorstehenden Ansprüche 1 bis 5,
**dadurch gekennzeichnet, dass** die wenigstens eine Aufnahmeeinheit (8a) eine Verriegelungseinrichtung (23) zum wahlweisen Verriegeln eines Akkumulators (2) oder eines Sensormoduls (14) in einer Aufnahmeeinheit (8a) enthält.

7. Vorrichtung (1) nach Anspruch 6,
**dadurch gekennzeichnet, dass** die Verriegelungseinrichtung (23) eine Signaleingabeeinheit (50) zum reversiblen Einstellen der Verriegelungseinrichtung (23) in einen verriegelten oder entriegelten Zustand enthält.

8. Vorrichtung (1) nach Anspruch 7,
**dadurch gekennzeichnet, dass** die Signaleingabeeinheit (50) der Verriegelungseinrichtung (23) mit der Kommunikationseinrichtung (6) verbindbar ist.

9. Vorrichtung (1) nach wenigstens einem der vorstehenden Ansprüche 1 bis 8,
**dadurch gekennzeichnet, dass** eine Abdeckeinrichtung (24) zum wenigstens teilweisen Abdecken der wenigstens einen Aufnahmeeinheit (8a) verbunden mit wenigstens einem Akkumulator (2) oder wenigstens einem Sensormodul (14) enthalten ist.

10. Vorrichtung (1) nach Anspruch 9,
**dadurch gekennzeichnet, dass** die Abdeckeinrichtung (24) eine Temperaturregeleinrichtung (25) zum wahlweisen Kühlen oder Heizen der wenigstens einen Aufnahmeeinheit (8a) enthält.

11. Verfahren zum Steuern und Regeln einer Vorrichtung (1) nach wenigstens einem der Ansprüche 1 bis 10, enthaltend wenigstens die Verfahrensschritte:
- Verbinden wenigstens eines ersten Akkumulators (2) mit der Aufnahme- und Halteeinrichtung (8);
- Senden wenigstens eines Kennwertes des wenigstens ersten Akkumulators (2) an die Steuerungseinrichtung (4);
- Transportieren des wenigstens ersten Akkumulators (2) von einem ersten Ort zu einem zweiten Ort in Abhängigkeit des wenigstens einen Kennwertes des wenigstens ersten Akkumulators (2) oder in Abhängigkeit wenigstens eines durch die Kommunikationseinrichtung (6) empfangenden Signals;
- Trennen des wenigstens ersten Akkumulators (2) von der Aufnahme- und Halteeinrichtung (8);
- Verbinden wenigstens eines zweiten Akkumulators (2) mit der Aufnahme- und Halteeinrichtung (8);
- Senden wenigstens eines Kennwertes des wenigstens zweiten Akkumulators (2) an die Steuerungseinrichtung (4);
- Transportieren des wenigstens zweiten Akkumulators (2) von dem zweiten Ort zu einem ersten oder dritten Ort in Abhängigkeit des wenigstens einen Kennwertes des wenigstens zweiten Akkumulators (2) oder in Abhängigkeit wenigstens eines durch die Kommunikationseinrichtung (6) empfangenden Signals.

12. Verfahren nach Anspruch 11,
**gekennzeichnet durch** die Verfahrensschritte:
- Verriegeln eines Akkumulators (2) oder eines Sensormoduls (14) in einer Aufnahmeeinheit (8a) mittels der Verriegelungseinrichtung (23) durch Eingeben wenigstens eines ersten Signals an der Signaleingabeeinheit (50); und
- Entriegeln des wenigstens einen Akkumulators (2) oder Sensormoduls (14) von der Aufnahmeeinheit (8a) durch Eingabe wenigstens eines zweiten Signals an der Signaleingabeeinheit (50).

13. Verfahren nach Anspruch 11 oder 12,
**gekennzeichnet durch** die Verfahrensschritte:
- Erfassen wenigstens eines Wertes durch wenigstens einen Sensor (19) eines Sensormoduls (14);
- Senden des wenigstens einen erfassten Wertes an die an die Steuerungseinrichtung (4), Speichereinheit (5) und/oder Navigationseinrichtung (7); und
- Einstellen des Antriebs (9) von einem ersten in einen zweiten Zustand und/oder Einstellen der Fahrwerkseinrichtung (10) von einem ersten in einen zweiten Zustand in Abhängigkeit des wenigstens einen erfassten Wertes.

14. System (100) enthaltend eine Vorrichtung (1) zum Transportieren einer Anzahl an Akkumulatoren (2) nach wenigstens einem der Ansprüche 1 bis 10 sowie eine Ladevorrichtung (40) zum Versorgen wenigstens eines Akkumulators (2) mit elektrischer Energie,
**dadurch gekennzeichnet, dass** die Ladevorrichtung (40) eine Greifeinrichtung (42) zum Entnehmen wenigstens eines Akkumulators (2) aus einer Aufnahmeeinheit (8a) sowie zum Einlegen wenigstens eines Akkumulators (2) in eine Aufnahmeeinheit (8a).
